# EUROPÄISCHE PATENTANMELDUNG

(11) **EP 0 723 852 A1**
(43) Veröffentlichungstag der Anmeldung: **31.07.1996**
(21) Anmeldenummer: 96100167.4
(22) Anmeldetag: 08.01.1996
(51) Int. Cl.: B29C 61/06, B29C 70/22

(54) **Manschette aus einer wärmeschrumpfbaren Schicht mit einer Einlage**

(30) Priorität: 26.01.1995 DE 19502406
(71) Anmelder: RXS Kabelgarnituren Gesellschaft mit beschränkter Haftung, D-58093 Hagen (DE)
(72) Erfinder: Schulte, Wolfgang, Dipl.-Ing., D-58099 Hagen (DE); Meltsch, Hans-Jürgen, Dipl.-Ing., D-58239 Schwerte (DE); Affolderbach, Ulrich, Dipl.-Ing., D-42279 Wuppertal (DE)
(74) Vertreter: Fuchs, Franz-Josef, Dr.-Ing.

(57) **Zusammenfassung**

Bei der Erfindung handelt es sich um eine schrumpfbare Manschette, bestehend aus einer äußeren schrumpfbaren Außenschicht (3, 3a - 3b) aus vernetztem Kunststoffmaterial und einer eingelagerten verstärkenden Einlage (4), sowie einer inneren Zusatzschicht (5) aus unvernetztem Kunststoffmaterial. Die Einlage (4) besteht aus sich kreuzenden Fäden (7, 8) aus nicht reckbarem Material, die ein Gewebe bzw. Gelege oder dergleichen bilden, wobei die in Schrumpfrichtung (SR) verlaufenden Fäden (7) wendelförmig auf Trägerfäden (6) aufgewickelt sind.

## Beschreibung

Die Erfindung betrifft eine Manschette aus einer wärmeschrumpfbaren Schicht aus Kunststoff mit einer Einlage aus einem Gelege oder Gewebe, bestehend aus sich kreuzenden Fasern aus nicht oder nur geringfügig reckbarem bzw. schrumpfbarem Material, wobei mindestens die in Streck- bzw. Schrumpfrichtung verlaufenden Fasern nach Art einer Wendel auf einem Trägerfaden geformt sind.

Aus der deutschen Offenlegungsschrift DE 38 33 415 - A1 ist ein Verfahren zur Herstellung eines wärmerückstellbaren Bandes aus Kunststoff mit einem die Reißfestigkeit des Bandes bei Schrumpftemperatur erhöhenden Gewebe beschrieben. Dabei wird ein Gewebe aus sich kreuzenden Fäden aus nicht oder nur geringfügig reckbarem Material hergestellt, wobei zumindest die in der Schrumpf- bzw. Reckrichtung verlaufenden Fäden nach Art einer Wendel geformt sind. Dieses Gewebe wird in eine Kunststoffmatrix eingebettet und in Richtung der wendelartig verlaufenden Fäden gereckt, so daß sie in der gleichen Richtung bei Wärmeeinwirkung schrumpfbar ist. Dabei sind die wendelartig verlaufenden Fäden vorteilhafterweise auf einem Kunststoffstrang aufgewickelt.

Aufgabe der vorliegenden Erfindung ist nun, die mechanische Stabilität einer schrumpfbaren Manschette zu erhöhen, wobei die Außenfläche vor Einwirkungen durch die Flamme beim Schrumpfvorgang besonders widerstandsfähig sein muß. Die gestellte Aufgabe wird gemäß der Erfindung mit einer Manschette der eingangs erläuterten Art dadurch gelöst, daß die wärmeschrumpfbare Schicht mit der eingelagerten Einlage als Außenschicht auf der Außenseite der Manschette vernetzt und angeordnet ist, daß auf der nach innen zum zu umhüllenden Gegenstand weisenden Seite eine innere Zusatzschicht aus nicht vernetztem, bei Schrumpftemperatur erweichendem, jedoch nicht schmelzendem Kunststoffmaterial angeordnet ist.

Vorteil der Erfindung gegenüber dem Stand der Technik ist nun, daß die Wärmebelastbarkeit der Oberfläche der Außenschicht infolge der Vernetzung wesentlich erhöht wird. Außerdem ist das Gewebe bzw. Gelege so ausgestaltet, daß genügend Zwischenraum vorhanden ist, durch die das Kunststoffmaterial der Außenschicht hindurchgreifend eine gute Einbindung und Haftung zur Einlage ergibt. Durch die entsprechend großen Durchbrüche des Gewebes bzw. Geleges und durch die Lücken lassende Umspinnung der Fasern auf einem Trägerfaden ist ein guter Verbund zwischen den Deckschichten in den Durchbrüchen und zum Trägerfaden hin gesichert. Durch die Strahlenvernetzung wird dieser Verbund noch zusätzlich verbessert. Auf diese Weise ist die Belastbarkeit gegenüber einer Flamme sehr hoch. Diese Außenschicht ist beispielsweise als durchgehende homogene Schicht mit der Einlage durch Co-extrusion hergestellt. Doch kann die Außenschicht auch aus zwei Folien hergestellt werden, zwischen denen die Einlage eingepreßt wird, zum Beispiel durch Kalandrieren der beiden Folien. Auf diese Außenschicht, die aus einem vernetzbaren Polyethylen-Compound besteht, wird dann die innere Zusatzschicht auf der Innenseite, die später dem zu umhüllenden Gegenstand zugewandt ist, des gereckten Kunststoffmaterials aufgebracht. Diese Zusatzschicht besteht aus einem unvernetzten, bei Schrumpftemperatur erweichenden Polyethylen-Compound, einem Long-Density-Polyethylen (LDPE), einem nicht näher modifizierten Standard-Polyethylen (PE) oder aus Ethylen-Venyl-Acetat (EVA) o.a..

Die Trägerfäden des Gewebes bzw. Geleges bestehen aus einem nicht schrumpffähigen Kunststoffmaterial, vorzugsweise aus dem gleichen Material wie die Außenschicht oder zumindest aus einem bezüglich der gegenseitigen Haftfähigkeit kompatiblem Kunststoffmaterial, so daß eine einwandfreie Bondierung bzw. Haftung zustande kommt.

Durch diese Abstimmung der Materialien ergeben sich nun folgende Vorteile:
- Kein unvernetztes Material wird der Flamme ausgesetzt, so daß die Gefahr des Abbrennens oder Abtropfens entfällt.
- Die innen liegende Zusatzschicht erhöht zusätzlich die mechanische Festigkeit vor und nach dem Schrumpfen, da eine größere homogene Wanddicke vorhanden ist.
- Die schrumpfbare Außenschicht schiebt bzw. drückt die innere Zusatzschicht zusammen und da dann diese zusammengeschobene Innenschicht stärker wird, ergibt sich zusätzlich ein größerer Schrumpfbereich.
   Außerdem kann die Manschette auch auf der Innenseite mit einer Permeationssperre, z.B. aus einer Aluminiumfolie, beschichtet werden, wobei diese teilweise oder ganz mit der Zusatzschicht verbunden ist. Es kann jedoch auch erst eine Bondierung während des Schrumpfvorganges erfolgen. In jedem Fall wird die Permeationssperre während des Schrumpfvorganges zusammengeschoben, wobei die sich dabei bildenden Falten mit dem während des Schrumpfens erweichenden Material der Zusatzschicht aufgefüllt und verpreßt werden. Diese Permeationssperre kann auch nur im inneren Bereich der Manschette aufgelegt sein, damit die Kleberschichtbereiche der Einführungen ohne weitere Belegungen sind. Die Permeationssperre kann einseitig oder beidseitig mit Schmelzkleber beschichtet sein. Die Verwendung von selbstklebenden Permeationssperren ist ebenfalls möglich, wobei diese Permeationssperren dann zweckmäßigerweise nur eineinseitig kleben und auch nur teilweise fixiert sind.

Die Erfindung wird nun anhand von drei Figuren näher erläutert.
- Figur 1: zeigt eine Manschette in Frontansicht.
- Figur 2: zeigt einen Querschnitt durch die Manschettenwandung.
- Figur 3: zeigt den Aufbau der Einlage.

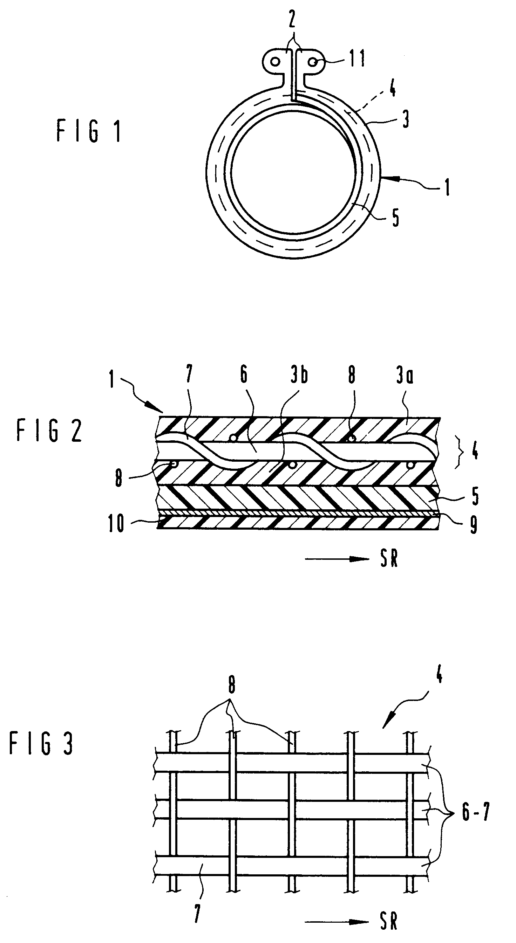

In Figur 1 wird der prinzipielle Aufbau der erfindungsgemäßen Manschette 1 gezeigt. Es ist ersichtlich, daß diese Manschette 1 längsgeschlitzt ist und entlang des Schlitzes Verschlußelemente 2 in Form von hinterschnittenen Wülsten aufweist, über die beim Verschließen eine Verschlußschiene geschoben wird. In diesen Wülsten können auch Längseinlagen 11 vorgesehen werden. Die Manschette selbst besteht, wie oben bereits beschrieben ist, aus einer wärmeschrumpfbaren Außenschicht 3, in die die verstärkende Einlage 4 eingelagert ist, wobei diese Einlage 4 den Streck- bzw. Schrumpfvorgang aufgrund der wendelartig aufgebrachten Fäden möglichst ohne Behinderung zuläßt. Auf der Innenseite der Manschette 1 ist die Zusatzschicht 5 aus nicht vernetztem Kunststoffmaterial aufgebracht, so daß diese beim Schrumpfen durch die schrumpfende Außenschicht 3 auf den zu umhüllenden Gegenstand aufgepreßt wird.

Figur 2 zeigt die Manschette 1 im Querschnitt, so daß auch der Aufbau der Einlage 4 deutlich wird. Diese Einlage 4 wird als Gewebe oder Gelege aus sich kreuzenden Fäden oder Fasern aus nicht oder kaum dehnbarem Material hergestellt. Dabei verlaufen die senkrecht zur Zeichenebene im Querschnitt gezeichneten reißfesten Fäden 8 als Kettfäden, während jeder parallel zur Zeichenebene verlaufende reißfeste Faden 7 wendelförmig auf jeweils einem gestreckt verlaufenden Trägerfaden 6 aufgewickelt ist. Dies ist gleichzeitig die Streck- bzw. Schrumpfrichtung SR; denn die reißfesten Fäden 7 erhalten auf diese Weise gewissermaßen eine "Dehnungsreserve", d.h. sie besitzen im aufgewickelten Zustand eine Überlänge, so daß sie beim Recken des Verbundes auf ihre volle Länge ausgezogen werden können, ohne daß eine Dehnung stattfindet. Die Trägerfäden 6 bestehen aus einem bei Schrumpftemperatur bzw. bei Strecktemperatur erweichenden bzw. schmelzendem Material, so daß diese Trägerfäden 6 dann verschwinden. Zurück bleiben dann die mehr oder weniger gestreckten reißfesten Fäden 7 im Verbund, die beim Schrumpfvorgang entsprechend umgelagert werden, ohne daß sie aus dem Verbund austreten. Eine Behinderung des Schrumpfvorganges findet ebenfalls nicht statt.

Diese Einlage 4 ist nun entweder in einer homogenen Außenschicht 3 eingelagert, wie in Figur 1 angedeutet ist, oder sie ist, wie aus Figur 2 hervorgeht, zwischen zwei zunächst einzelnen Folien 3a und 3b eingebracht, wobei dieser Verbund aufgrund der gewählten Materialkombination entsprechend stark in sich bondiert ist. Auf diese Außenschicht 3 bzw. 3a - 3b ist die nicht vernetzte Zusatzschicht 5 aufgebracht, die zum Beispiel bei Bedarf mit einer Permeationssperre 9, z.B. einer Aluminiumfolie bedeckt ist. Zusätzlich kann eine Schmelzkleberschicht 10 auf der Innenseite aufgebracht werden.

Die Figur 3 verdeutlicht in einer Draufsicht die Anordnung einer Einlage 4, die aus den gestreckten Fäden 8 und den in Streck- bzw. Schrumpfrichtung SR verlaufenden, die Dehnung bzw. Schrumpfung zulassenden Fäden 6 - 7, die aus den Trägerfäden 6 und den gewendelten Fäden 7 (siehe Figur 2) bestehen. Dies ist als Beispiel aufgeführt, wobei auch andere Ausführungsformen von Gelegen oder ähnlichen Konfigurationen im Sinne der Erfindung verwendet werden können.

Die verwendeten Außenschichten weisen eine Stärke von 4,0 bis 5,5 mm, und die innere Zusatzschicht eine Stärke von 0,2 bis 1 mm auf.

Die Einlage 4 kan in der Außenschicht 3 auch asymmetrisch eingelagert sein. Wenn Folien 3a und 3b verwendet werden, dann sind diese in diesem Fall unterschiedlich stark.

## Patentansprüche

1. Manschette aus einer wärmeschrumpfbaren Schicht aus Kunststoff mit einer Einlage aus einem Gelege oder Gewebe, bestehend aus sich kreuzenden Fasern aus nicht oder nur geringfügig reckbarem bzw. schrumpfbarem Material, wobei mindestens die in Streck- bzw. Schrumpfrichtung verlaufenden Fasern nach Art einer Wendel auf einem Trägerfaden geformt sind,
**dadurch gekennzeichnet,**
daß die wärmeschrumpfbare Schicht mit der eingelagerten Einlage(4) als Außenschicht (3, 3a - 3b) auf der Außenseite der Manschette (1) vernetzt und angeordnet ist, daß auf der nach innen zum zu umhüllenden Gegenstand weisenden Seite eine innere Zusatzschicht (5) aus nicht vernetztem, bei Schrumpftemperatur erweichenden, jedoch nicht schmelzenden Kunststoffmaterial angeordnet ist.

2. Manschette nach Anspruch 1,
**dadurch gekennzeichnet,**
daß die Abstände der Fasern (7, 8) so groß sind, daß das Kunststoffmaterial der Außenschicht (3, 3a - 3b) durch die Gelege- bzw. Gewebelücken zur gegenseitigen Bondierung hindurchdringt.

3. Manschette nach einem der vorhergehenden Ansprüche,
**dadurch gekennzeichnet,**
daß das Material des nicht schrumpffähigen Trägerfadens (6) gleich oder zumindest bezüglich der gegenseitigen Haftfähigkeit kompatibel ist mit dem Material der schrumpfbaren Außenschicht (3, 3a - 3b).

4. Manschette nach einem der vorhergehenden Ansprüche,
**dadurch gekennzeichnet,**
daß die Außenschicht (3, 3a - 3b) eine Stärke von 4,0 bis 5,5 mm und die innere Zusatzschicht (5) eine Stärke von 0,2 bis 1,0 mm aufweisen.

5. Manschette nach einem der vorhergehenden Ansprüche,
**dadurch gekennzeichnet,**
daß die Zusatzschicht (5) auf der zum zu umhüllenden Gegenstand weisenden Seite zumindest teilweise eine Permeationssperre (9), insbesondere eine Aluminiumfolie, aufweist.

6. Manschette nach Anspruch 5,
**dadurch gekennzeichnet,**
daß die Permeationssperre (9) einseitig mit Schmelzkleber beschichtet ist.

7. Manschette nach Anspruch 5,
**dadurch gekennzeichnet,**
daß die Permeationssperre (9) zweiseitig mit Schmelzkleber beschichtet ist.

8. Manschette nach Anspruch 5,
**dadurch gekennzeichnet,**
daß die Permeationssperre (9) eine selbstklebende Haftschicht aufweist.

9. Manschette nach einem der vorhergehenden Ansprüche,
**dadurch gekennzeichnet,**
daß eine Schmelzkleberschicht (10) zumindest in Teilbereichen auf der zum umhüllten Gegenstand weisenden Innenseite der Zusatzschicht (5) bzw. der Permeationssperre (9) angeordnet ist.

10. Manschette nach einem der vorhergehenden Ansprüche,
**dadurch gekennzeichnet,**
daß die wärmeschrumpfende Außenschicht (3, 3a - 3b) aus einem Polyethylen-Compound besteht.

11. Manschette nach einem der vorhergehenden Ansprüche,
**dadurch gekennzeichnet,**
daß die Zusatzschicht (5) aus einem unvernetzten Polyethylen-Compound besteht.

12. Manschette nach einem der Ansprüche 1 bis 10,
**dadurch gekennzeichnet,**
daß die Zusatzschicht (5) aus Long-Density-Polyethylen (LDPE) besteht.

13. Manschette nach einem der Ansprüche 1 bis 10,
**dadurch gekennzeichnet,**
daß die Zusatzschicht (5) aus einem nicht modifizierten Standard-Polyethylen (PE) besteht.

14. Manschette nach einem der Ansprüche 1 bis 10,
**dadurch gekennzeichnet,**
daß die Zusatzschicht (5) aus Ethylen-Venyl-Acetat (EVA) besteht.

15. Manschette nach einem der vorhergehenden Ansprüche,
**dadurch gekennzeichnet,**
daß die Einlage (4) in einer homogenen Außenschicht (3) eingelagert ist.

16. Manschette nach einem der Ansprüche 1 bis 14,
**dadurch gekennzeichnet,**
daß die Einlage (4) zwischen zwei die Außenschicht (3) bildenden Folien (3a, 3b) eingelagert ist, wobei die Folien 3a, 3b) durch die Einlage (4) hindurch miteinander bondiert sind.

17. Manschette nach einem der vorhergehenden Ansprüche,
**dadurch gekennzeichnet,**
daß die Einlage (4) asymmetrisch in der Außenschicht (3, 3a - 3b) eingelagert ist.
